# EUROPEAN PATENT SPECIFICATION

(11) **EP 4 438 465 B1**
(45) Date of publication and mention of the grant of the patent: **06.05.2026**
(21) Application number: 23164254.7
(22) Date of filing: 27.03.2023
(51) Int. Cl.: B64C 9/02, B64C 9/18

(54) **SEALING STRIP, CONTROL SURFACE ARRANGEMENT, AIRCRAFT WING AND AIRCRAFT**
DICHTLEISTE, STEUERFLÄCHENANORDNUNG, FLUGZEUGFLÜGEL UND FLUGZEUG
JOINT D'ÉTANCHÉITÉ, AGENCEMENT DE SURFACE DE COMMANDE, AILE D'AÉRONEF ET AÉRONEF

(43) Date of publication of application: 02.10.2024
(73) Proprietor: Airbus Operations GmbH, 21129 Hamburg (DE)
(72) Inventor: Schlipf, Bernhard, 21129 Hamburg (DE); Lorenz, Florian, 21129 Hamburg (DE)
(74) Representative: KASTEL Patentanwälte PartG mbB

(56) References cited:
- EP-A1- 0 071 669
- EP-A1- 0 410 328
- EP-A1- 3 222 515
- DE-A1- 102012 006 187
- FR-A1- 2 479 306
- US-A- 3 884 000

## Description

The invention relates to a control surface arrangement with adjacent control surface elements and with a sealing strip for sealing a gap between the convexly curved aerodynamic surface elements. Further, the invention relates to an aircraft wing having such control surface arrangement. Further, the invention relates to an aircraft with such control surface arrangement and/or such a wing. Finally, the invention relates to use of a sealing strip for sealing a gap between convexly curved aerodynamic surface elements of an aircraft.

Reference is made to the following documents:
[1] EP 0 071 669 A1
[2] EP 0 410 328 A1
[3] US 3 884 000 A
[4] EP 3 222 515 A1
[5] DE 10 2012 006 187 A1
[6] FR 2 479 306 A1
[7] neutral fiber. (n.d.) McGraw-Hill Dictionary of Scientific & Technical Terms, 6E. (2003). Retrieved February 10 2025 from
   https://encyclopedia2.thefreedictionary.com/neutral+fiber

Document [5] discloses a flap arrangement for aircraft, comprising a hinge arrangement with three bearing points, where two bearing points are rigidly connected to a base body and to each flap, and remaining bearing points allow local movement between the base body and each flap. A gap is provided between two adjacent flaps which can have a sliding seal.

As indicated, e.g. in [7], a neutral fibre (in mechanics) is the line of zero stress in cross section of a bent beam, separating the region of compressive stress from that of tensile stress.
[1] discloses a device for bridging tension gaps in sidewalks or other paving, wherein a seal is introduced in grooves of the paving elements. The seal has a an outer profile plate and an inner profile plate connected by ribs. [2] discloses a ribbon shaped profile seal for sealing gaps in concreted buildings with longitudinal ribs as stiffening structures. [3] discloses a device for the fixation of joint sealing strips in molds for concrete casting use. Also [6] lies in the field of building construction, especially of prefabricated buildings and relates to sealed joints between two adjacent edges of two prefabricated panels.
[4] discloses a sealing device for a flight control surface mechanism of an aircraft, wherein the sealing device comprises a fixed seal attached to a fixed part of the flight control surface mechanism and a movable seal attached to a movable wing surface of the flight control surface mechanism. [5] discloses a flap arrangement with a basis body and a flap movable relative to the basis body by means of a hinge arrangement.

Between slats or other control surface elements of an aircraft, a gap is required which is covered by a so-called weather seal. The weather seal is a sealing strip which is curved, in use, according to the curvature of the control surface elements.

An object of the invention is to improve a sealing of a gap between control surfaces of an aircraft in order to enhance aerodynamics.

For achieving such object, the invention provides a control surface arrangement with a sealing strip according to claim 1. According to further aspects, the invention provides an aircraft wing according to claim 11, an aircraft having a control surface arrangement with a gap sealed by the sealing strip according to claim 12, and a use of a sealing strip for sealing a gap between control surface elements of an aircraft in accordance independent claim 13.

Advantageous embodiments are subject-matters of the dependent claims.

The invention provides a control surface arrangement for an aircraft, comprising a first and second control surface element, wherein the first and second control surface elements are aerodynamic surface elements, have convexly curved outer surfaces, and are arranged side by side in a spanwise direction with a gap therebetween, wherein the gap is covered by a sealing strip. The sealing strip is configured for sealing the gap between the convexly curved aerodynamic surface elements of the aircraft such that the sealing strip has a convexly curved outer side exposed to the outside. The sealing strip has a profile with a mid-seal section and welting sections. The welting sections are arranged at end portions of the profile for fixing the sealing strip at the aerodynamic surface elements and protrude on an inner side from the mid-seal section. The mid-seal section is arranged between the welting sections. At least one stringer-type stiffening structure is provided on the inner side of the mid-seal section.

Preferably, the stiffening structure comprises a flange portion protruding on the inner side of the mid-seal section.

Preferably, the stiffening structure consists only of the flange. Preferably, the flange has a rectangular or trapezoid or triangular section.

Preferably, the stiffening structure comprises a neck portion and a head portion.

Preferably, the head portion comprises at least one longitudinal inner reinforcement and/or reinforcement fibres.

Preferably, the stiffening structure is configured to align the local neutral fibre location of the mid-seal section of the bent sealing strip with the local neutral fibre location of the welting sections.

Preferably, one stiffening structure is provided in the centrum of the sealing strip. Preferably, several stiffening structures are evenly distributed over the width of the mid-seal section. Preferably, even spaces are provided between adjacent stiffening structures. Preferably, even spaces are provided between the at least one stiffening structure and the welting sections.

Preferably, one of the welting sections is fixed to the first control surface element, the other welting section is fixed to the second control surface element, the outer side of the mid-seal section is convexly curved and exposed to the outside, and the stringer-type stiffening structure protrudes on the concavely curved inner side.

Preferably, the control surface elements are movable between a fully extended position and a fully retracted position.

Preferably, the control surface elements are leading edge slats for an aircraft wing.

According to another aspect, the invention provides an aircraft wing, comprising a control surface arrangement according to any of the aforementioned embodiments.

According to another aspect, the invention provides an aircraft, comprising a control surface arrangement or an aircraft wing according to any of the aforementioned embodiments.

According to another aspect, the invention proposes an use of a sealing strip as a weather seal for sealing a gap between convexly curved aerodynamic surface elements of an aircraft such that the sealing strip has an outer side that is exposed to the outside and is convexly curved in use. The sealing strip has a profile with a mid-seal section and welting sections, wherein the welting sections are arranged at end portions of the profile for fixing the sealing strip at the aerodynamic surface elements and protrude on an inner side from the mid-seal section, wherein the mid-seal section is arranged between the welting sections, wherein at least one stringer-type stiffening structure is provided on the inner side of the mid-seal section.

Preferably, the at least one stringer-type stiffening structure is configured such that the local neutral fibre of the mid-seal section of the bent sealing strip is shifted from the mid-plane of a main body of the mid-seal section to the inside.

Preferred embodiments of the invention comprise a stringer weather seal.

A weather seal is provided with a stringer in order to enhance its bending behaviour so that it can fit better to the form of curved aerodynamic surfaces having a gap therebetween which shall be covered by the weather seal.

According to preferred embodiments of the invention a seal is provided that can be bent such that it fits more closely to curved aerodynamics surfaces such that a step between the aerodynamic surface and the seal is reduced compared to conventional weather seals. Hence, preferred embodiments of the invention have the advantage to improve aerodynamics by reduction of parasitic drags and attachment line discontinuities.

Embodiments of the invention are explained below referring to the accompanying drawings in which:
- Fig. 1: shows a perspective view of an aircraft with wings and control surface arrangements on the leading edge of the wings;
- Fig. 2: a spanwise and vertical sectional view through a part of the control surface arrangement which is located at the detail II of Fig. 1, with a sealing strip according to a comparative example;
- Fig. 3: an enlarged view of the sealing strip of Fig. 2 wherein a possible bending tendency thereof is indicated;
- Fig. 4: a further sectional view of the control surface arrangement with the sealing strip according to the comparative example, wherein local neutral fibre of different sections of the sealing strip are indicated;
- Fig. 5: a sectional view similar to Fig. 4 wherein a sealing strip according to a first embodiment of the invention is provided for sealing a gap of the control surface arrangement;
- Fig. 6: a sectional view as in Fig. 4 and 5 wherein a sealing strip according to a second embodiment of the invention is provided for sealing the gap of the control surface arrangement;
- Fig. 7: a perspective view of a length of the sealing strip according to the first embodiment before its installation on the control surface arrangement; and
- Fig. 8 to 11: sectional views of sealing strips according to a third to sixth embodiment of the invention.

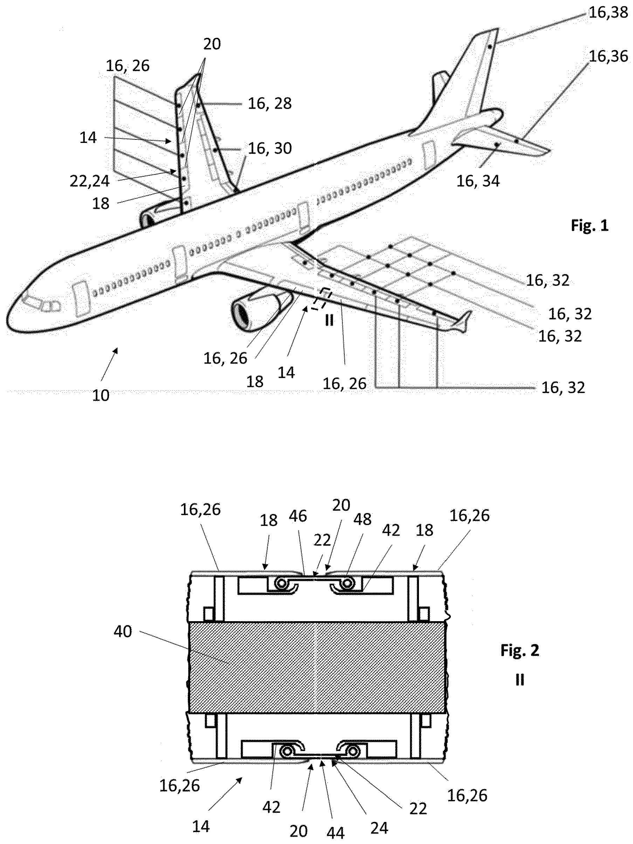

Fig. 1 shows an aircraft 10 having aircraft wings 12 and control surface arrangements 14. A detail II of one of the control surface arrangements 14 is shown in a spanwise and sectional view in Fig. 2. The control surface arrangement 14 comprises first and second control surface elements 16 having convexly curved outer surfaces 18 and being arranged side by side in a spanwise direction. A gap 20 between the control surface elements 16 is covered by a sealing strip 22 for providing a weather seal 24.

Referring again to Fig. 1, the aircraft 10 has several control surface elements 16 on different locations. Examples for the control surface elements 16 are slats 26 on the leading edges of the wings 12, ailerons 28 and flaps 30, spoilers 32, trimmable horizontal stabilizers 34, elevators 36, and a rudder 38. Some of the control surface elements 14, especially the leading-edge slats 16, have the convexly curved outer surface 18. Fig. 2 shows a sectional view according to the detail II of Fig. 1 wherein a first and second slat 26 are arranged close to each other with the gap 20 therebetween and wherein a sealing strip 22 according to a comparative example is installed to cover the gap 20. Especially, Fig. 2 shows a slat installation as an example for the control surface arrangement 14 with the weather seal 24.

The slats 26 are movably mounted on a wing structure 40 so that they can move between a fully extended position and a fully retracted position. The weather seal 24 is to be fitted with the slats 26.

For mounting the weather seal 24, the slats 26 are equipped with seal brackets 42 on their inner sides. Other seal mounting structures such as grooves formed integrally in the side regions of the slats 26 are possible.

The seal 24 is to be fitted in the extended slat position and moves together with the slats 24. In accordance with the curvature of the outer surfaces 18 of the slats 26, the sealing strip 22 constituting the weather seal 24 is bent such that its outer side 44 to be exposed to the outside is convexly bent.

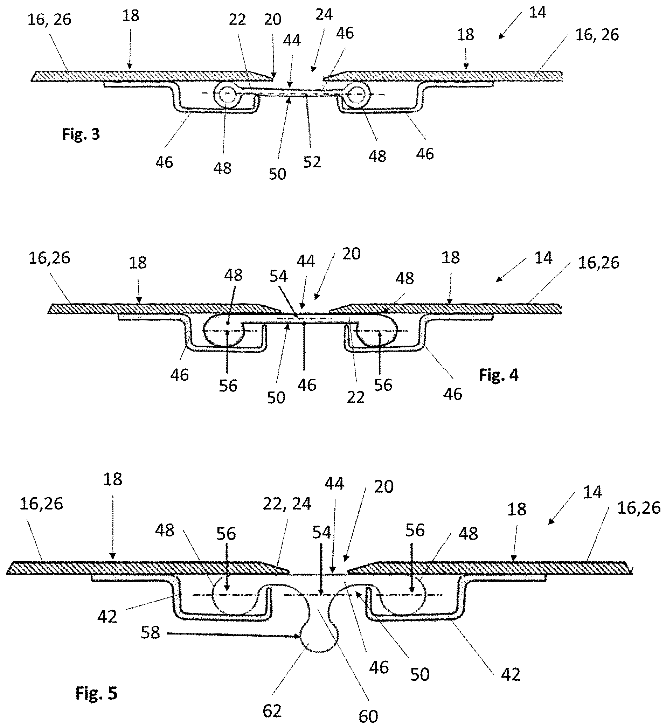

Figs. 3 and 4 show further views of this control surface arrangement 14 with the sealing strip 22 according to the comparative example. The sealing strip 22 has a profile with a mid-seal section 46 and welting sections 48. The welting sections 48 are arranged at end portions of the profile so that they are provided along the longitudinal edges of the sealing strip 22. The mid-seal section 46 is arranged between the welting sections 48. The welting sections 48 are used to fix the sealing strip 22 on the control surface elements 16. Especially, the seal brackets 42 enclose the welting sections 48 in a positive engagement. Since the outer side 44 of the sealing strip 22 is intended to lie closely against inner sides at the edges of the control surface elements 16, it is essentially flat as seen in the cross-section, and the welting sections 48 protrude on an inner side 50 of the sealing strip 22.

When the sealing strip 22 according to the comparative example is bent to align with the nose radius, the mid-seal section 46 may be deformed towards the neutral fibre 52 (in sense of bending) of the overall cross-section as shown in Fig. 3. This can happen because the mid-seal section 46 as manufactured is in the tension-area of the bent profile. Thus, this tension "pulls" the mid-seal section 46 on to a smaller bent radius. This reliefs the midseal-section-tension partially. The overall cross section's neutral fibre 52 is driven by the both welting sections 48 which are required to retain the sealing strip 22 and, hence, cannot be overcome by different sizing. Fig. 4 compares the local neutral fibre 54 of the mid-seal section 46 and the local neutral fibre 56 of the welting sections 48 and shows a misalignment of these local neutral fibres 54, 56.

Fig. 5 shows the control surface arrangement 14 wherein a sealing strip 22 according to a first embodiment of the present invention is installed as weather seal 24. The control surface arrangement 14 is the same as described above. The sealing strip 22 according to embodiments of the invention has the same elements as the sealing strip 22 of the comparative example with the difference that at least one stringer-type stiffener structure 58 is provided on the inner side 50 of the mid-seal section 46. The stringer-type stiffener structure 58 is configured to align the local neutral fibre 54 of the mid-seal section 46 and the local neutral fibre 56 of the welting sections 48 as good as possible, as visible from a comparison of Figs. 4 and 5. In order to fulfil this task, the stringer-type stiffener structure 58 may have different forms.

Due to the low Young's modulus in seal-materials the local neutral fibres 54, 56 of the cross section are considered in order to improve the bending behaviour of the sealing strip 22 and in order to fit the bent sealing strip 22 better to the curvature of the gap 20. It has been found that the root-cause for detrimental bending effects is a misalignment of local neutral fibres 54, 56 between the mid-seal section 46 and the welting sections 48. By a mid-seal stringer, the local neutral fibre 54 of the mid-seal section 46 is shifted more inward. Preferably, it will be aligned with the local neutral fibre 56 of the welting section 48. By alignment of local neutral fibre locations, the tendency of the mid-seal portion 46 to deform to smaller radii shall be encountered.

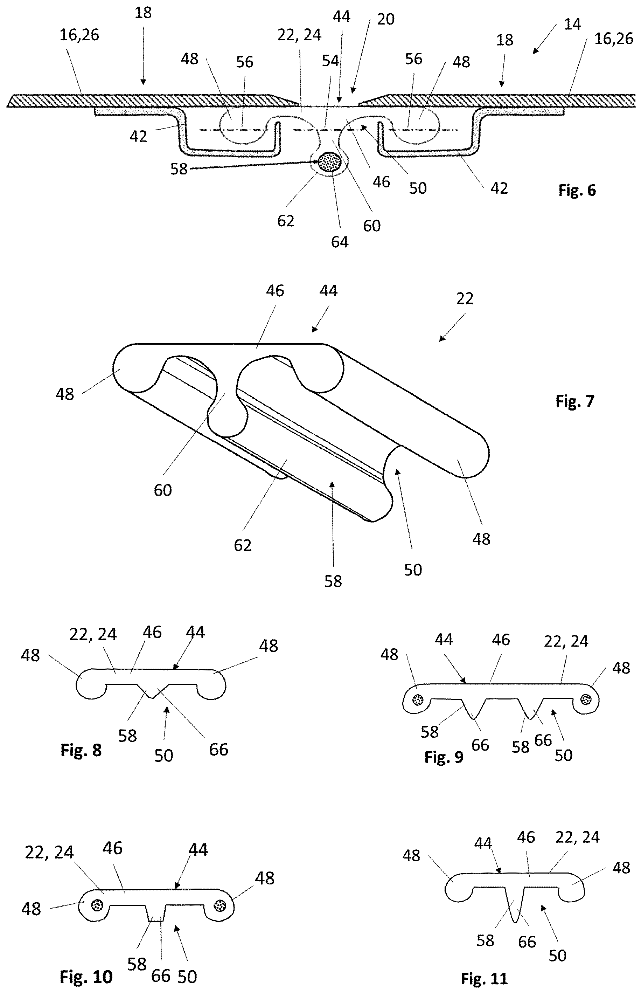

According to the first embodiment as shown in Figs. 5 and 7, the stiffener structure 58 has a thinner neck portion 60 and a thicker head portion 62.

According to a second embodiment as shown in Fig. 6, the stiffener structure 58 may contain longitudinal reinforcements such as reinforcing fibres 64. Reinforcement fibres 64 (with a higher Young's Modulus than the seal matrix) in the stringer's head portion 62 may help to reduce the stringer size and probably its weight.

As shown in Fig. 7, the stringer solution can be produced as an end-less constant cross-section seal und thus safe costs. The sealing strip 22 may be made from any materials typical for conventional weather seals, such as rubber.

Further embodiments are shown in Figs. 8 to 11. As visible therefrom, the stiffener structure 58 may also comprise a flange 66 or may even consist of solely the flange 66. Different cross-sections such as a rectangular section, a triangular section or a trapezoid section are possible. Especially for sealing strips 22 having a larger width, several stiffener structures 58 may be provided extending in parallel on the inner side of the mid-seal section 46. A further parameter for adjusting the bending behaviour of the sealing strip 22 is the height with which the stiffening structure 58 protrudes from the inner side of the mid-seal section 46. Preferably, all these parameters are chosen such that the local neutral fibres 54, 56 are aligned as good as possible. According to the embodiments shown in Figs. 5 to 8, 10 and 11, one stiffening structure 58 is provided in the centrum of the sealing strip 22. Fig. 9 shows an embodiment with several stiffening structures 58. The several sealing structures 58 may be evenly distributed over the width of the mid-seal section 46. Preferably, the distances between the stiffening structures 58 and the welting sections 48 are equal.

With preferred embodiments of the invention, the sealing strip 22 will lie in its intended location to close the gap 20 as smooth as possible and/or to avoid a step between the control surface element edge and the outer side 44 of the sealing strip 22 as far as possible. This improves aerodynamics by reduction of parasitic drag and attachment line discontinuities.

In order to improve a sealing of a gap (20) between control surfaces of an aircraft for enhancing aerodynamics, the invention proposes that a sealing strip (22) seals a gap (20) between convexly curved aerodynamic surface elements (16) of a control surface arrangement of an aircraft (10) such that the sealing strip (22) has a convexly curved outer side (44), the sealing strip (22) having a profile with a mid-seal section (46) and welting sections (48), wherein the welting sections (48) are arranged at end portions of the profile for fixing the sealing strip (22) at the aerodynamic surface elements (16) and protrude on an inner side from the mid-seal section (46), wherein the mid-seal section (46) is arranged between the welting sections (48), wherein at least one stringer-type stiffening structure (58) is provided on the inner side (50) of the mid-seal section (46). Further, a wing (12) and an aircraft (10) comprising such a control surface arrangement (14) with said sealing strip (22) as weather seal (24) and a corresponding use have been described.

### Reference sign list:

- 10: aircraft
- 12: wing
- 14: control surface arrangement
- 16: control surface element
- 18: outer surface
- 20: gap
- 22: sealing strip
- 24: weather seal
- 26: slat
- 28: aileron
- 30: flap
- 32: spoiler
- 34: trimmable horizontal stabilizer
- 36: elevator
- 38: rudder
- 40: wing structure
- 42: seal bracket
- 44: outer side
- 46: mid-seal section
- 48: welting section
- 50: inner side
- 52: neutral fibre (overall cross-section)
- 54: local neutral fibre of the mid-seal section
- 56: local neutral fibre of the welting section
- 58: stiffener structure
- 60: neck portion
- 62: head portion
- 64: reinforce fibres
- 66: flange

## Claims

1. Control surface arrangement (14) for an aircraft, comprising a first and second control surface element (16), wherein the first and second control surface elements (16) are aerodynamic surface elements (16), have convexly curved outer surfaces (18), and are arranged side by side in a spanwise direction with a gap (20) therebetween, wherein the gap (20) is sealed by a sealing strip (22) such that the sealing strip (22) has a convexly curved outer side (44), the sealing strip (22) having a profile with a mid-seal section (46) and welting sections (48), wherein the welting sections (48) are arranged at end portions of the profile for fixing the sealing strip (22) at the aerodynamic surface elements (16) and protrude on an inner side from the mid-seal section (46), wherein the mid-seal section (46) is arranged between the welting sections (48), wherein at least one stringer-type stiffening structure (58) is provided on the inner side (50) of the mid-seal section (46).

2. Control surface arrangement (14) according to claim 1, wherein the stiffening structure (58) comprises a flange (66) protruding on the inner side (50) of the mid-seal section (46).

3. Control surface arrangement (14) according to claim 2, wherein the stiffening structure (58) consists of the flange (66) which has a rectangular or trapezoid or triangular cross-section.

4. Control surface arrangement (14) according to any of the preceding claims, wherein the stiffening structure (58) comprises a neck portion (60) and a head portion (62).

5. Control surface arrangement (14) according to any of the preceding claims, wherein the stiffening structure (58) comprises at least one longitudinal inner reinforcement and/or reinforcement fibres (64).

6. Control surface arrangement (14) according to any of the preceding claims, wherein the stiffening structure (58) is configured to align the local neutral fibre (54) location of the mid-seal section (46) of the bent sealing strip (22) with the local neutral fibre (56) location of the welting sections (48).

7. Control surface arrangement (14) according to any of the preceding claims wherein one stiffening structure (58) is provided in the centrum of the sealing strip (22) or wherein several stiffening structures (58) are evenly distributed over the width of the mid-seal section (46) with preferably equal spaces between the stiffening structures (58) and the welting sections (48).

8. Control surface arrangement (14) according to any of the preceding claims, wherein one of the welting sections (48) is fixed to the first control surface element (16), the other welting section (48) is fixed to the second control surface element (16), the outer side (44) of the mid-seal section (46) is convexly curved, and the stringer-type stiffening structure (58) protrudes on the concavely curved inner side (50).

9. Control surface arrangement (14) according to any of the preceding claims, wherein the control surface elements (16) are movable between a fully extended position and a fully retracted position.

10. Control surface arrangement (14) according to any of the preceding claims, wherein the control surface elements (16) are leading edge slats (26) for an aircraft wing (12).

11. Aircraft wing (12), comprising a control surface arrangement (14) according to any of the preceding claims.

12. Aircraft (10), comprising a control surface arrangement (14) according to any of the claims 1 to 10 or an aircraft wing (12) according to claim 11.

13. Use of a sealing strip (22) as a weather seal (24) for sealing a gap (20) between convexly curved aerodynamic surface elements (16) of an aircraft (10) such that the sealing strip (22) has an outer side (44) being convexly curved in use, wherein the sealing strip (22) has a profile with a mid-seal section (46) and welting sections (48), wherein the welting sections (48) are arranged at end portions of the profile for fixing the sealing strip (22) at the aerodynamic surface elements (16) and protrude on an inner side from the mid-seal section (46), wherein the mid-seal section (46) is arranged between the welting sections (48), wherein at least one stringer-type stiffening structure (58) is provided on the inner side (50) of the mid-seal section (46),

14. Use of the sealing strip (22) according to claim 13, wherein the at least one stringer-type stiffening structure (58) is configured such that the local neutral fibre (54) of the mid-seal section (46) of the bent sealing strip (22) is shifted from the mid-plane of the mid-seal section (46) to the inside.

## Patentansprüche

1. Steuerflächenanordnung (14) für ein Flugzeug, umfassend ein erstes und zweites Steuerflächenelement (16), wobei das erste und zweite Steuerflächenelement (16) aerodynamische Flächenelemente (16) sind, konvex gekrümmte Außenflächen (18) aufweisen und in einer Spannweitenrichtung mit einem Spalt (20) dazwischen nebeneinander angeordnet sind, wobei der Spalt (20) durch einen Dichtungsstreifen (22) abgedichtet ist, so dass der Dichtungsstreifen (22) eine konvex gekrümmte Außenseite (44) aufweist, wobei der Dichtungsstreifen (22) ein Profil mit einem Dichtungsmittelabschnitt (46) und Kederabschnitten (48) aufweist, wobei die Kederabschnitte (48) an Endabschnitten des Profils zur Fixierung des Dichtungsstreifens (22) an den aerodynamischen Flächenelementen (16) angeordnet sind und an einer Innenseite vom Dichtungsmittelabschnitt (46) vorstehen, wobei der Dichtungsmittelabschnitt (46) zwischen den Kederabschnitten (48) angeordnet ist, wobei mindestens eine stringerartige Versteifungsstruktur (58) auf der Innenseite (50) des Dichtungsmittelabschnitts (46) vorgesehen ist.

2. Steuerflächenanordnung (14) nach Anspruch 1, wobei die Versteifungsstruktur (58) einen Flansch (66) umfasst, der an der Innenseite (50) des Dichtungsmittelabschnitts (46) vorsteht.

3. Steuerflächenanordnung (14) nach Anspruch 2, wobei die Versteifungsstruktur (58) aus dem Flansch (66) besteht, der einen rechteckigen oder trapezförmigen oder dreieckigen Querschnitt aufweist.

4. Steuerflächenanordnung (14) nach einem der vorhergehenden Ansprüche, wobei die Versteifungsstruktur (58) einen Halsabschnitt (60) und einen Kopfabschnitt (62) umfasst.

5. Steuerflächenanordnung (14) nach einem der vorhergehenden Ansprüche, wobei die Versteifungsstruktur (58) mindestens eine innere Längsverstärkung und/oder Verstärkungsfasern (64) umfasst.

6. Steuerflächenanordnung (14) nach einem der vorhergehenden Ansprüche, wobei die Versteifungsstruktur (58) dazu ausgelegt ist, die Position der lokalen neutralen Faser (54) des Dichtungsmittelabschnitts (46) des gebogenen Dichtungsstreifens (22) mit der Position der lokalen neutralen Faser (56) der Kederabschnitte (48) auszurichten.

7. Steuerflächenanordnung (14) nach einem der vorhergehenden Ansprüche, wobei eine Versteifungsstruktur (58) im Mittelpunkt des Dichtungsstreifens (22) vorgesehen ist oder wobei mehrere Versteifungsstrukturen (58) gleichmäßig über die Breite des Dichtungsmittelabschnitts (46) mit vorzugsweise gleichen Abständen zwischen den Versteifungsstrukturen (58) und den Kederabschnitten (48) verteilt sind.

8. Steuerflächenanordnung (14) nach einem der vorhergehenden Ansprüche, wobei einer der Kederabschnitte (48) am ersten Steuerflächenelement (16) befestigt ist, der andere Kederabschnitt (48) am zweiten Steuerflächenelement (16) befestigt ist, die Außenseite (44) des Dichtungsmittelabschnitts (46) konvex gekrümmt ist und die stringerartige Versteifungsstruktur (58) an der konkav gekrümmten Innenseite (50) vorsteht.

9. Steuerflächenanordnung (14) nach einem der vorhergehenden Ansprüche, wobei die Steuerflächenelemente (16) zwischen einer vollständig ausgefahrenen Position und einer vollständig eingefahrenen Position beweglich sind.

10. Steuerflächenanordnung (14) nach einem der vorhergehenden Ansprüche, wobei die Steuerflächenelemente (16) Vorderkantenlamellen (26) für einen Flugzeugflügel (12) sind.

11. Flugzeugflügel (12), der eine Steuerflächenanordnung (14) nach einem der vorhergehenden Ansprüche umfasst.

12. Flugzeug (10), das eine Steuerflächenanordnung (14) nach einem der Ansprüche 1 bis 10 oder einen Flugzeugflügel (12) nach Anspruch 11 umfasst.

13. Verwendung eines Dichtungsstreifens (22) als Wetterdichtung (24) zum Abdichten eines Spalts (20) zwischen konvex gekrümmten aerodynamischen Flächenelementen (16) eines Flugzeugs (10), so dass der Dichtungsstreifen (22) eine im Gebrauch konvex gekrümmte Außenseite (44) aufweist, wobei der Dichtungsstreifen (22) ein Profil mit einem Dichtungsmittelabschnitt (46) und Kederabschnitten (48) aufweist, wobei die Kederabschnitte (48) an Endabschnitten des Profils zum Fixieren des Dichtungsstreifens (22) an den aerodynamischen Flächenelementen (16) angeordnet sind und auf einer Innenseite vom Dichtungsmittelabschnitt (46) vorstehen, wobei der Dichtungsmittelabschnitt (46) zwischen den Kederabschnitten (48) angeordnet ist, wobei mindestens eine stringerartige Versteifungsstruktur (58) auf der Innenseite (50) des Dichtungsmittelabschnitts (46) vorgesehen ist.

14. Verwendung des Dichtungsstreifens (22) nach Anspruch 13, wobei die mindestens eine stringerartige Versteifungsstruktur (58) derart ausgelegt ist, dass die lokale neutrale Faser (54) des Dichtungsmittelabschnitts (46) des gebogenen Dichtungsstreifens (22) von der Mittelebene des Dichtungsmittelabschnitts (46) nach innen verschoben wird.

## Revendications

1. Agencement de gouverne (14) pour un aéronef, comprenant un premier et un deuxième élément de gouverne (16), les premier et deuxième éléments de gouverne (16) étant des éléments de surface aérodynamique (16), présentant des surfaces extérieures (18) à courbure convexe, et étant agencés côte à côte dans le sens de l'envergure avec un intervalle (20) entre eux, l'intervalle (20) étant obturé de façon étanche par une bande d'étanchéité (22) de sorte que la bande d'étanchéité (22) présente un côté extérieur (44) à courbure convexe, la bande d'étanchéité (22) présentant un profil avec une section d'étanchéité médiane (46) et des sections de revers (48), les sections de revers (48) étant agencées au niveau de parties d'extrémité du profil pour fixer la bande d'étanchéité (22) au niveau des éléments de surface aérodynamique (16) et faisant saillie sur un côté intérieur de la section d'étanchéité médiane (46), la section d'étanchéité médiane (46) étant agencée entre les sections de revers (48), au moins une structure de raidissement de type longeron (58) étant prévue sur le côté intérieur (50) de la section d'étanchéité médiane (46).

2. Agencement de gouverne (14) selon la revendication 1, dans lequel la structure de raidissement (58) comprend une membrure (66) faisant saillie sur le côté intérieur (50) de la section d'étanchéité médiane (46).

3. Agencement de gouverne (14) selon la revendication 2, dans lequel la structure de raidissement (58) se compose de la membrure (66) qui présente une section transversale rectangulaire ou trapézoïdale ou triangulaire.

4. Agencement de gouverne (14) selon l'une quelconque des revendications précédentes, dans lequel la structure de raidissement (58) comprend une partie formant col (60) et une partie formant tête (62).

5. Agencement de gouverne (14) selon l'une quelconque des revendications précédentes, dans lequel la structure de raidissement (58) comprend au moins un renfort longitudinal intérieur et/ou des fibres de renfort (64).

6. Agencement de gouverne (14) selon l'une quelconque des revendications précédentes, dans lequel la structure de raidissement (58) est configurée pour aligner l'emplacement d'une fibre neutre locale (54) de la section d'étanchéité médiane (46) de la bande d'étanchéité incurvée (22) avec l'emplacement d'une fibre neutre locale (56) des sections de revers (48).

7. Agencement de gouverne (14) selon l'une quelconque des revendications précédentes, dans lequel une structure de raidissement (58) est prévue au centre de la bande d'étanchéité (22) ou dans lequel plusieurs structures de raidissement (58) sont réparties uniformément sur la largeur de la section d'étanchéité médiane (46) avec des espaces de préférence égaux entre les structures de raidissement (58) et les sections de revers (48).

8. Agencement de gouverne (14) selon l'une quelconque des revendications précédentes, dans lequel l'une des sections de revers (48) est fixée au premier élément de gouverne (16), l'autre section de revers (48) est fixée au deuxième élément de gouverne (16), le côté extérieur (44) de la section d'étanchéité médiane (46) présente une courbure convexe, et la structure de raidissement de type longeron (58) fait saillie sur le côté intérieur (50) à courbure concave.

9. Agencement de gouverne (14) selon l'une quelconque des revendications précédentes, dans lequel les éléments de gouverne (16) sont mobiles entre une position complètement sortie et une position complètement rentrée.

10. Agencement de gouverne (14) selon l'une quelconque des revendications précédentes, dans lequel les éléments de gouverne (16) sont des becs de bord d'attaque (26) pour une aile (12) d'aéronef.

11. Aile (12) d'aéronef, comprenant un agencement de gouverne (14) selon l'une quelconque des revendications précédentes.

12. Aéronef (10), comprenant un agencement de gouverne (14) selon selon l'une quelconque des revendications 1 à 10 ou une aile (12) d'aéronef selon la revendication 11.

13. Utilisation d'une bande d'étanchéité (22) comme joint d'étanchéité contre les intempéries (24) pour obturer de façon étanche un espace (20) entre des éléments de surface aérodynamique (16) à courbure convexe d'un aéronef (10) de sorte que la bande d'étanchéité (22) présente un côté extérieur (44) à courbure convexe lors de l'utilisation, la bande d'étanchéité (22) présentant un profil avec une section d'étanchéité médiane (46) et des sections de revers (48), les sections de revers (48) étant agencées au niveau de parties d'extrémité du profil pour fixer la bande d'étanchéité (22) au niveau des éléments de surface aérodynamique (16) et faisant saillie sur un côté intérieur de la section d'étanchéité médiane (46), la section d'étanchéité médiane (46) étant agencée entre les sections de revers (48), au moins une structure de raidissement de type longeron (58) étant prévue sur le côté intérieur (50) de la section d'étanchéité médiane (46).

14. Utilisation de la bande d'étanchéité (22) selon la revendication 13, l'au moins une structure de raidissement de type longeron (58) étant configurée de sorte que la fibre neutre locale (54) de la section d'étanchéité médiane (46) de la bande d'étanchéité incurvée (22) est décalée depuis le plan médian de la section d'étanchéité médiane (46) vers l'intérieur.
